# EUROPÄISCHE PATENTSCHRIFT

(11) **EP 0 968 859 B1**
(45) Veröffentlichungstag und Bekanntmachung des Hinweises auf die Patenterteilung: **13.02.2002**
(21) Anmeldenummer: 99111841.5
(22) Anmeldetag: 19.06.1999
(51) Int. Cl.: B60H 1/00

(54) **Verfahren zur Änderung der Innenraumtemperatur eines Fahrzeuges**
Procedure to change cabin temperature of a vehicle
Procédé de modification de la température régnant à l'intérieurd'un véhicule

(30) Priorität: 30.06.1998 DE 19829143
(43) Veröffentlichungstag der Anmeldung: 05.01.2000
(73) Patentinhaber: Hella KG Hueck & Co., 59552 Lippstadt (DE)
(72) Erfinder: Decius, Andreas, 59558 Lippstadt (DE)

(56) Entgegenhaltungen:
- EP-A- 0 757 943
- DE-A- 3 836 596
- DE-A- 4 214 702
- DE-A- 19 542 325
- US-A- 5 518 065

## Beschreibung

Die Erfindung betrifft ein Verfahren zur Änderung der Innenraumtemperatur eines Fahrzeuges mit Klimaanlage zur Kompensation einer Veränderung des Istwerts der Innentemperatur infolge von äußeren Einflüssen, wie insbesondere niedrigen Außentemperaturen sowie eine Fahrzeug-Klimaanlage mit einer derartigen Sollwert-Anpassung.

Bei einer Fahrzeug-Klimaanlage wird für die Temperatur im Innenraum des Fahrzeuges manuell ein Sollwert vorgegeben, wobei die Klimaanlage die Innenraumtemperatur auf diesem Sollwert hält. Bei niedrigen Außentemperaturen, d.h. bei Außentemperaturen von unterhalb 10° C, wird das Temperaturempfinden der Fahrzeuginsassen durch die abgekühlten Scheiben und Karosserieteile des Fahrgastraumes insoweit beeinflußt, als die Insassen es im Fahrzeug bei unverändert gebliebenem Sollwert für die Innenraumtemperatur als nicht warm genug empfinden. Dies resultiert insbesondere aus der Tatsache, daß sich das Temperaturempfinden der Insassen aufgrund einer längeren im wesentlichen unveränderten Sitzhaltung verändert und ihr Wärmebedarf insoweit steigt. Ohne automatischen Eingriff in die Steuerung der Klimaanlage müßten die Insassen daher bei länger anhaltenden tiefen Außentemperaturen den Sollwert für die Innenraumtemperatur erhöhen, um auf diese Weise für eine Kompensation zu sorgen. Da dies als lästig empfunden wird, wird bei Fahrzeug-Klimaanlagen daher bei niedrigen Außentemperaturen dem vom Fahrer eingestellten Sollwert für die Innenraumtemperatur ein anhand der Außentemperatur ermittelter Anpaßwert (Offset) überlagert. Dieser Vorgang wird auch als Physiologie-Temperaturniveauanhebung bzw. -anpassung bezeichnet. Die automatische Veränderung des Sollwerts für die Innenraumtemperatur in Abhängigkeit von der Außentemperatur kann fahrzeugabhängig sein und wird insbesondere empirisch ermittelt. Da verringerte Außentemperaturen sich nicht sofort spürbar für die Insassen im Fahrgastraum auswirken, ist es zweckmäßig, die Anpassung des Innenraumtemperatur-Sollwertes zeitverzögert vorzunehmen. Ein Verfahren und eine Vorrichtung für eine derartige Physiologie-Temperaturniveauanpassung ist in DE 42 14 702 C2 beschrieben.

Die physiologisch bedingte Anpassung des Innenraumtemperatur-Sollwerts hat sich in der Praxis grundsätzlich bewährt und führt grundsätzlich auch zu einer Steigerung des Komforts. Allerdings hat sich herausgestellt, daß das Maß der Physiologie-Temperaturniveauanpassung mitunter auf das Temperaturempfinden der Insassen nicht optimal abgestimmt ist.

Der Erfindung liegt daher die Aufgabe zugrunde, ein Verfahren zur physiologisch bedingten Anpassung des Sollwerts der Innenraumtemperatur bei einer Fahrzeug-Klimaanlage zu schaffen, bei dem dem jeweiligen Temperaturempfinden der Insassen in stärkerem Maße als bisher Rechnung getragen wird.

Zur Lösung dieser Aufgabe wird mit der Erfindung ein Verfahren zur Änderung des Sollwerts der Innenraumtemperatur eines Fahrzeuges mit Klimaanlage zur Kompensation einer Veränderung des Istwerts der Innenraumtemperatur infolge von äußeren Einflüssen, wie insbesondere niedrigen Außentemperaturen, mit den folgenden Schritten vorgeschlagen:
- Ermittlung des zur Kompensation der äußeren Einflüsse erforderlichen Anpaßwerts für den Sollwert der Innenraumtemperatur,
- Ermittlung der Betriebsdauer des Fahrzeuges ab dem letzten Startzeitpunkt,
- Ermittlung der Standdauer des Fahrzeuges ab dem letzten Abschaltzeitpunkt,
- Ermittlung eines Anteils des Anpaßwerts, der zwischen einem vorgebbaren Mindestanteil des Anpaßwerts und einem Maximalanteil liegt, wobei dieser Anteil
   - gleich dem Mindestanteil ist, wenn das Fahrzeug nach Ablauf einer vorgebbaren Maximalstanddauer gestartet wird,
   - gleich dem Maximalanteil ist, wenn die Betriebsdauer größer als eine vorgebbare Maximalbetriebsdauer ist,
   - sich während der aktuellen Betriebsdauer mit einer vorgebbaren Anstiegsrate bis zum Maximalanteil erhöht oder
   - sich während der aktuellen Standdauer mit einer vorgebbaren Abfallrate verringert, und
- Verändern des Sollwerts der Innenraumtemperatur um den jeweils ermittelten Anteil des Anpaßwerts.

Eine Fahrzeug-Klimaanlage, bei der die obige Sollwert-Anpassung realisiert ist, ist erfindungsgemäß versehen mit
- einer Temperiervorrichtung zur Temperierung von einem Fahrzeug-lnnenraum zuzuführender Luft,
- einem Außentemperatursensor zur Ermittlung der Außentemperatur,
- einem Innenraumtemperatursensor zur Ermittlung des Istwerts der Innenraumtemperatur,
- einer Innenraumtemperatur-Einstellvorrichtung zur Einstellung des Sollwerts der Innenraumtemperatur,
- einer Innenraumtemperatur-Regelvorrichtung, die ein Differenzsignal aus dem Istwert und dem Sollwert der Innenraumtemperatur empfängt und
- einer Sollwert-Anpaßvorrichtung, die dem durch die Innenraumtemperatur-Einstellvorrichtung (50) eingestellten Sollwert einen Anpaßwert überlagert,dessen Größe abhängig ist von der Außentemperatur.

Bei dieser Klimaanlage ist erfindungsgemäß vorgesehen,
- daß der Sollwert-Anpaßvorrichtung eine Anpaßwert-Veränderungsvorrichtung nachgeschaltet ist, die eine Betriebsdauer-Meßvorrichtung zum Messen der Betriebsdauer des Fahrzeuges ab dem letzten Startzeitpunkt und eine Standdauer-Meßvorrichtung zum Messen der Standdauer des Fahrzeuges ab dem letzten Abschaltzeitpunkt aufweist,
- daß die Anpaßwert-Veränderungsvorrichtung einen Anteil des Anpaßwerts ermittelt, der zwischen einem vorgebbaren Mindestanteil des Veränderungswerts und einem Maximalanteil des Veränderungswerts liegt, wobei dieser Anteil
   - gleich dem Mindestanteil ist, wenn das Fahrzeug nach Ablauf einer vorgebbaren Maximalstanddauer gestartet wird,
   - gleich dem Maximalanteil ist, wenn die Betriebsdauer größer als eine vorgebbare Maximalbetriebsdauer ist,
   - sich während der aktuellen Betriebsdauer mit einer vorgebbaren Anstiegsrate bis zum Maximalanteil erhöht oder
   - sich während der aktuellen Standdauer mit einer vorgebbaren Abfallrate verringert, und
- daß die Anpaßwert-Veränderungsvorrichtung den Anpaßwert auf den jeweils ermittelten Anteil setzt.

Nach der Erfindung erfolgt die physiologisch bedingte Anpassung des Sollwerts für die Innenraumtemperatur in Abhängigkeit von der seit dem letzten Start des Fahrzeuges verstrichenen Fahrzeit. Damit wird dem Umstand Rechnung getragen, daß die bisher eingesetzten Mechanismen zur physiologisch bedingten Veränderung des Innenraumtemperatur-Sollwerts genau dann optimal sind, wenn man von einem eingeschwungenen Dauerbetriebszustand ausgeht. Wie man empirisch ermitteln kann, liegt ein derartiger Zustand z.B. nach längeren Autobahnfahrten von etwa 3 bis 4 Stunden bzw. nach längeren Fahrten vor, während derer die Insassen im wesentlichen unbeweglich in ihrer Sitzhaltung verbleiben. Dieser Zustand, in dem sich der Körper eines Insassen nach einer längeren Fahrzeit befindet, ist streng von demjenigen Körperzustand zu unterscheiden, in dem sich die Insassen beispielsweise bei Antritt bzw. beim Fortsetzen einer Fahrt befinden. Bei Antritt bzw. Wiederantritt einer Fahrt wird nämlich in der weit überwiegenden Zahl von Fällen das körperliche Temperaturempfinden der Insassen anders sein als bei der in der Fahrzeug-Klimaanlage integrierten Physiologie-Anpassung vorausgesetzt wird. Dies rührt beispielsweise daher, daß sich die Insassen zuvor in aufgeheizten Räumen aufgehalten oder körperlich betätigt haben, wodurch ihre Körper "aufgeheizt" sind. Die volle Physiologie-Temperaturniveauanhebung bzw. -anpassung zu Beginn der Fahrt würde in einem solchen Fall zu einer von den Insassen als unangenehm empfundenen Überhitzung führen, da der Körper aufgrund der relativ starren Sitzhaltung erst mit fortschreitender Fahrzeit mehr Wärme benötigt.

Erfindungsgemäß wird di e Betriebsdauer des Fahrzeuges ab dem letzten Startzeitpunkt und die Standdauer des Fahrzeuges ab dem letzten Abschaltzeitpunkt gemessen. Zu Beginn einer Fahrt, d.h. zum Startzeitpunkt des Fahrzeuges wird der Sollwert der Innenraumtemperatur nach der Erfindung lediglich um einen vorgebbaren (prozentualen) Anteil der physiologisch bedingten Sollwertänderung verändert. Dieser Anfangsanteil wird dann kontinuierlich bzw. quasi kontinuierlich oder auch stufenweise mit zunehmender Fahrzeit erhöht, bis schließlich die physiologisch bedingte Anpassung mit einem vorgebbaren Maximalanteil, bei dem es sich insbesondere um den vollen physiologisch erforderlichen Anpaßwert handelt, auf eine Sollwertveränderung der Innenraumtemperatur durchschlägt. Die Anstiegsrate ist derart gewählt, daß sich nach einer vorgebbaren Mindestfahrzeit von einigen Stunden der von der Physiologie-Anpassung der Klimaanlage gelieferte volle Wert für die Sollwertveränderung der Innenraumtemperatur regelungstechnisch auswirkt.

Die Messung der Betriebsdauer des Fahrzeuges kann derart erfolgen, daß nur diejenigen Phasen gemessen werden, in denen das Fahrzeug sich mit einer vorgebbaren Mindestgeschwindigkeit von einigen wenigen Kilometern pro Stunde bewegt. Auf diese Weise würden Haltezeiten des Fahrzeuges, während derer der Motor des Fahrzeuges läuft, nicht miterfaßt. Da es sich hierbei im Regelfall um verkehrsbedingte Haltezeiten (beispielsweise Haltezeiten an Ampeln, Kreuzungen o.dgl.) handeln wird und die Insassen im wesentlichen in ihrer starren Sitzhaltung verbleiben, ist es zweckmäßiger, auch diese Phasen als "Fahrzeit" zu interpretieren und dementsprechend als Betriebsdauer des Fahrzeuges zu werten. Dies ist im übrigen auch meßtechnisch einfacher zu realisieren, da nun in die Meßdauer nicht die Abfrage einer Mindestgeschwindigkeit des Fahrzeuges eingeht.

So wie nach der Erfindung der zunehmende Wärmebedarf der Insassen mit fortschreitender Betriebsdauer des Fahrzeuges berücksichtigt wird, muß umgekehrt auch der Fall abgedeckt werden, daß der Wärmebedarf der Insassen nach einer Standphase des Fahrzeuges im Regelfall reduziert sein wird. Durch eine Standphase des Fahrzeuges kann nämlich beispielsweise das körperliche Temperaturempfinden der Insassen dadurch verändert sein, daß sie bei einem Pausenaufenthalt in einem geheizten Raum (beispielsweise Raststätte) "externe Wärme" gespeichert haben oder bei einem Pausenaufenthalt unter freiem Himmel (beispielsweise Spaziergang, Sport, Tankstop) sich ihre Körper mit zunehmender Pausendauer auf völlig andere Umgebungsverhältnisse eingestellt haben. In beiden Fällen ist es also zweckmäßig, wenn die Klimaanlage auf diese Veränderungen durch eine dynamische Physiologie-Temperaturniveauanpassung reagiert. Nach der Erfindung wird dies dadurch realisiert, daß die Standdauer des Fahrzeuges ab dem letzten Abschaltzeitpunkt meßtechnisch erfaßt wird und der jeweils aktuelle Anteil der regelungstechnisch aufgeschalteten physiologiebedingten Anpassung des Innenraumtemperatur-Sollwerts mit zunehmender Standdauer verringert wird. Zweckmäßig ist es, wenn diese Abfallrate größer ist als die Anstiegsrate, wobei es besonders vorteilhaft ist, wenn die Abfallrate doppelt so groß ist wie die Anstiegsrate. Die Anstiegs- und/oder Abfallrate kann konstant oder zeitlich veränderlich sein.

Mit der Erfindung wird also eine dynamische Anpassung der physiologisch bedingten Veränderung des Innenraumtemperatur-Sollwerts realisiert. Diese dynamische Anpassung erfolgt in Abhängigkeit von der Fahrzeit, oder allgemeiner ausgedrückt, der Betriebsdauer des Fahrzeuges ab dem letzten Startzeitpunkt und der Standdauer des Fahrzeuges ab dem letzten Abschaitzeitpunkt. Die Verringerung des jeweils regelungstechnisch wirksamen Anteils der physiologiebedingten Temperaturniveauanpassung sollte den vorgebbaren Anfangsteil nicht unterschreiten. Als Anfangsanteil werden beispielsweise 50 % bis 75 % der vollen Physiologieanpassung gewählt. Umgekehrt kann bei der erfindungsgemäßen dynamischen Physiologieanpassung der regelungstechnisch wirksame Anteil den vollen Wert der Sollwerttemperaturveränderung selbstverständlich nicht überschreiten.

Nachfolgend wird anhand der Figuren ein Ausführungsbeispiel der Erfindung näher erläutert. Im einzelnen zeigen:
- Fig. 1: den vorderen Teil eines Kraftfahrzeuges (Pkw) mit einer Klimaanlage, die eine dynamische Physiologie-Temperaturniveauanpassung aufweist, und
- Fig. 2: ein Blockschaltbild des Regelkreises der Klimaanlage des Fahrzeuges gemäß Fig. 1.

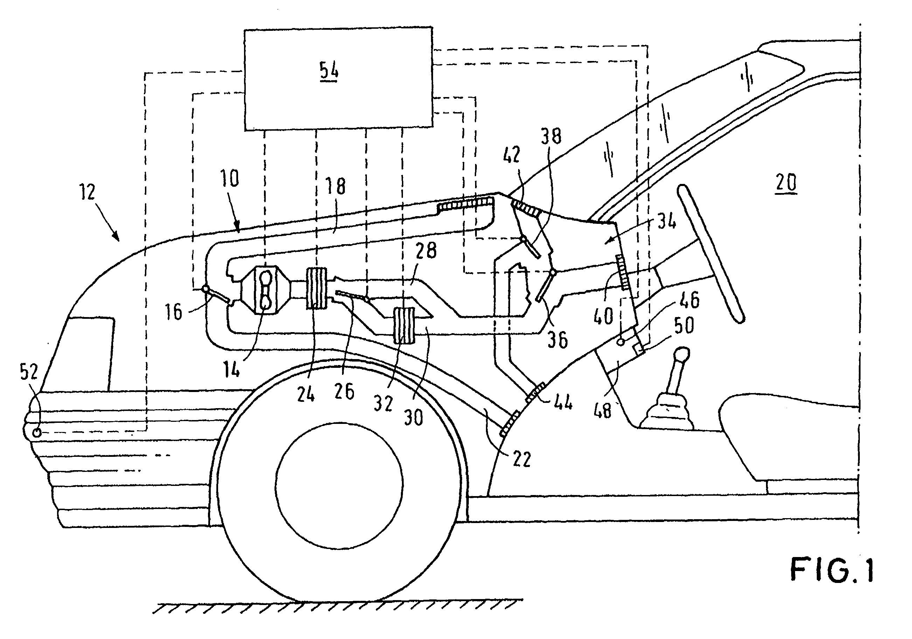

Gemäß Fig. 1 weist eine Klimaanlage 10 für ein Kraftfahrzeug 12 ein Gebläse 14 auf, das in Abhängigkeit von der Stellung einer Frischluft-/Umluftklappe 16 Frischluft aus einem Frischluft-Ansaugkanal 18 oder Umluft aus einem im Insassenraum 20 endenden Umluftkanal 22 ansaugt. In Strömungsrichtung betrachtet hinter dem Gebläse 14 befindet sich ein Verdampfer 24 zum Abkühlen der Ansaugluft. Die abgekühlte (und entfeuchtete) Luft gelangt in Abhängigkeit von der Stellung einer Mischerklappe 26 in einen von zwei zueinander parallelgeschalteten Kanäle 28,30. Einer dieser beiden Kanäle (im Ausführungsbeispiel der Kanal 30) weist einen Wärmetauscher 32 zum Erwärmen der zuvor abgekühlten Luft auf. Hinter dem Wärmetauscher 32 sind die beiden Kanäle 28,30 wieder zusammengeführt. Im Anschluß daran schließt sich eine Luftverteilvorrichtung 34 an, die zwei Klappen 36,38 aufweist, um die Luft wahlweise über die Mannanströmöffnungen 40, die Defrosteröffnungen 42 und/ oder die Fußraumausströmöffnungen 44 in den Insassenraum 20 einzulassen.

Die Steuerung der gesamten Klimaanlage 10 erfolgt dergestalt, daß eine vorgebbare Solltemperatur für den Innenraum 20 erreicht und gehalten wird. Zu diesem Zweck weist die Klimaanlage 10 einen Innenraum-Temperaturfühler 46 auf, der den Istwert T_{IST} der Innenraumtemperatur mißt und z.B. im Steuerungsgerät 48 untergebracht ist. Das Steuerungsgerät 48 verfügt über eine Einstellvorrichtung 50 zur manuellen Vorgabe des Sollwerts T_{SOLL} für die Innenraumtemperatur. Ferner ist die Klimaanlage 10 mit einem Außentemperatursensor 52 versehen, der z.B. im Bereich des vorderen Stoßfängers des Pkw 12 angeordnet ist und die Außentemperatur T_{AUSSEN} erfaßt. Darüber hinaus weist die Klimaanlage 10 eine weitere Vielzahl von hier nicht näher beschriebenen und in Fig. 1 nicht dargestellten Sensoren für beispielsweise die Sonnenintensität, Schadstoffkonzentration in der Frischluft, die Kühlwassertemperatur, etc. auf. Sämtliche dieser Sensoren sind mit einer zentralen Steuereinheit 54 verbunden, die ihrerseits mit (nicht dargestellten) Stellgliedern für den Verdampfer 24, den Wärmetauscher 32, das Gebläse 14 sowie die Klappen 16,26,36, 38 verbunden ist.

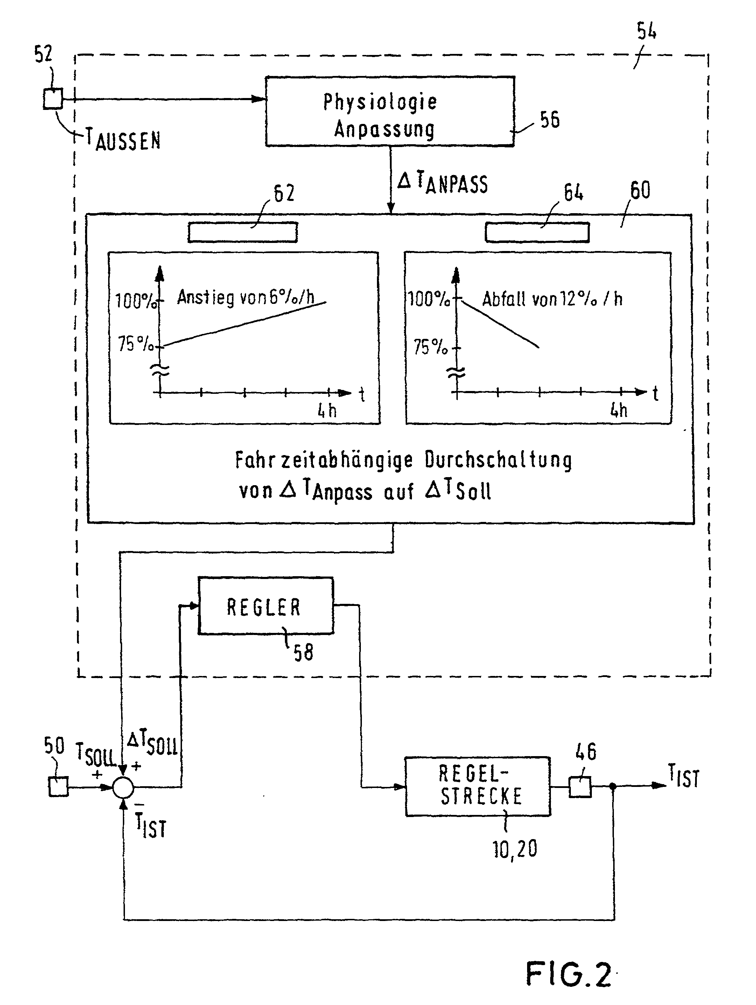

Die Klimaanlage 10 gemäß Fig. 1 verfügt über eine physiologiebedingte Anpassung des Innenraumtemperatur-Sollwerts T_{SOLL} in Abhängigkeit von der Außentemperatur. Diese Innenraumtemperatur-Sollwert-Veränderung erfolgt innerhalb der Steuereinheit 54 und ist in dem Blockschaltbild gemäß Fig. 2 bei 56 angedeutet. Die Physiologieanpaßvorrichtung 56 arbeitet beispielsweise so, wie in DE 42 14 702 C2 beschrieben realisiert und liefert in Abhängigkeit von dem Wert der Außentemperatur einen Anpaß- bzw. Ausgangswert ΔT_{ANPASS}. Bestandteil der Steuereinheit 54 ist ferner ein in Fig. 2 bei 58 angedeuteter Regler, dem das Ergebnissignal aus der Überlagerung eines Veränderungswerts ΔT_{SOLL} (Offset) für den Innenraumtemperatur-Sollwert T_{SOLL} und der Differenz aus dem eingestellten Innenraumtemperatur-Sollwert T_{SOLL} und dem Innenraumtemperatur-lstwert T_{IST} eingegeben wird. Der Offset ΔT_{SOLL} ergibt sich dabei in Abhängigkeit von der Fahrzeit und der Standdauer des Pkw 12 aus dem Ausgangswert ΔT_{ANPASS} der Physiologieanpaßvorrichtung 56, wie nachfolgend beschrieben werden wird.

Die Klimaanlage 10 des Pkw 12 gemäß Fig. 1 ist mit einer Anpaß-Veränderungsvorrichtung 60 zur fahrzeit-/standzeitabhängigen Durchschaltung des Ausgangswerts ΔT_{ANPASS} der Physiologieanpaßvorrichtung 56 auf den Offset ΔT_{SOLL} versehen. Diese Vorrichtung 60 ist mit einem Fahrzeitzähler 62 und einem Standzeitzähler 64 versehen. Während der Fahrzeitzähler 62 die Zeitspanne ab dem letzten Startzeitpunkt des Pkw 12 mißt, mißt der Standzeitzähler 64 die Standzeit ab dem letzten Abschaltzeitpunkt des Pkw 12. In der Vorrichtung 60 wird der Ausgangswert ΔT_{ANPASS} der Physiologieanpaßvorrichtung 56 entsprechend den Zählerständen der beiden Zähler 62,64 bewertet, um in Abhängigkeit dieser Zählerstände einen (prozentualen) Anteil von ΔT_{ANPASS} zwischen einem vorgebbaren Mindestanteil und einem vorgebbaren Maximalanteil, bei dem es sich um den vollen Anpaßwert ΔT_{ANPASS} handelt, als Offset ΔT_{SOLL} durchzuschalten.

Durch die Vorrichtung 60 soll dem normalerweise reduzierten Wärmebedarf der Insassen zu Beginn einer Fahrt bzw. nach einer Fahrtunterbrechung Rechnung getragen werden. Denn gerade zu Beginn einer Fahrt kann der Wärmebedarf der Insassen dadurch verringert sein, daß sich die Insassen zuvor in aufgeheizten Räumen aufgehalten oder körperlich betätigt haben. Die gleiche Situation ist oftmals nach einem Pausenaufenthalt, also nach einer Standphase anzutreffen.

Bei dem hier beschriebenen Ausführungsbeispiel wird zu Beginn des Fahrzeugstarts ein Mindestanteil von in diesem Fall 75 % des von der Physiologieanpaßvorrichtung 56 gelieferten Ausgangswerts Δ T_{ANPASS} als Sollwert Offset ΔT_{SOLL} dem von den Insassen eingestellten Innenraumtemperatur-Sollwert T_{SOLL} überlagert. Mit zunehmender Fahrzeit wird dieser Mindestanteil um eine Anstiegsrate von 6 Prozentpunkten pro Stunde Fahrzeit erhöht. Die Erhöhung erfolgt beispielsweise im Minutenabstand entsprechend anteilig, d.h. sozusagen kontinuierlich bzw. quasi kontinuierlich. Bei Vorgabe einer derartigen Anstiegsrate wird also nach einer Fahrzeit von etwa mehr als 4 Stunden der volle Ausgangswert der Physiologieanpaßvorrichtung 56 als ΔT_{SOLL} dem eingestellten Innenraumtemperatur-Sollwert T_{SOLL} überlagert. Ab einer Fahrzeit von 4 Stunden wirkt sich also der volle Ausgangswert ΔT_{ANPASS} der Physiologieanpaßvorrichtung 56 auf die Physiologie-Innenraumtemperaturniveauanhebung aus.

Während für die Dauer der Fahrzeit der jeweils durchgeschaltete und damit regelungstechnisch wirksame Anteil des Ausgangswerts der Physiologieanpaßvorrichtung 56 vom Mindestanteil (in diesem Beispiel 75 %) bis zum vollen Wert erhöht wird, verringert sich dieser Anteil für die Dauer der Standphasen um eine vorgebbare Abfallrate, die in diesem Ausführungsbeispiel 12 Prozentpunkte pro Stunde Fahrzeit beträgt, also doppelt so hoch wie die Anstiegsrate ist. Die Reduzierung des jeweils aktuell durchgeschalteten Anteils des Ausgangswerts der Physiologieanpaßvorrichtung 56 um das doppelte Maß seines Anstiegs trägt dem Umstand Rechn ung, daß in der weit überwiegenden Anzahl von Fällen davon ausgegangen werden kann, daß die Insassen bei einem Aufenthalt außerhalb des Pkw 12, also beispielsweise bei einem Pausenaufenthalt "externe Wärme" aufnehmen, indem sie sich beispielsweise in geheizten Räumen wie Gaststätten o.dgl. oder unter freiem Himmel (Spaziergang, Sport, Tankstop) aufhalten. Insoweit ist es also sinnvoll, die Auswirkungen der Physiologieanpassung auf die Temperaturregelung nach einer Standzeit des Pkw 12 in einem stärkeren Maß als, es zuvor bei der Fahrzeit der Fall war, zu berücksichtigen. Dahinter steckt die Überlegung, daß im allgemeinen die Aufnahme von Wärmeenergie durch die Insassen aufgrund körperlicher Betätigung in denjenigen Phasen, in denen sie sich nicht im Fahrzeug aufhalten (Standzeiten), größer ist als die Wärmeenergieabgabe in denjenigen Phasen, in denen sich die Insassen in Verharrung einer relativ starren Sitzhaltung im Fahrzeug aufhalten (Fahrzeiten).

Durch die erfindungsgemäß vorgesehene dynamische Physiologieanpassung des Sollwerts der Innenraumtemperatur kann eine von den Insasser empfundene Überhitzung in der Anfangsphase nach dem Start des Fahrzeuges verhindert werden. Dies steigert in spürbarem Maße den Komfort der Fahrzeug-Klimaanlage.

### BEZUGSZEICHENLISTE

- 10: Klimaanlage
- 12: Fahrzeug
- 14: Gebläse
- 16: Frischluft-/Umluftklappe
- 18: Frischluft-Ansaugkanal
- 20: Innenraum/Insassenraum
- 22: Umluft-Ansaugkanal
- 24: Verdampfer
- 26: Mischerklappe
- 28: Kanal
- 30: Kanal
- 32: Wärmetauscher
- 34: Luftverteilsystem
- 36: Klappe
- 38: Klappe
- 40: Mannanströmöffnung
- 42: Defrosteröffnung
- 44: Fußraumanströmöffnung
- 46: Innenraum-Temperatursensor
- 48: Steuergerät
- 50: T_{SOLL}-Einstellvorrichtung
- 52: Außentemperatursensor
- 54: Steuereinheit
- 56: Physiologieanpaßvorrichtung
- 58: Regler
- 60: Vorrichtung zur fahrzeit/standzeitabhängigen Durchschaltung von
ΔT_{ANPASS} auf ΔT_{SOLL}
- 62: Fahrzeitzähler
- 64: Standzeitzähler

## Patentansprüche

1. Verfahren zur Änderung des Sollwerts der Innenraumtemperatur eines Fahrzeuges mit Klimaanlage zur Kompensation einer Veränderung des Istwerts der Innenraumtemperatur infolge von äußeren Einflüssen, wie insbesondere niedrigen Außentemperaturen, mit den folgenden Schritten:
- Ermittlung des zur Kompensation der äußeren Einflüsse erforderlichen Anpaßwerts (Δ_{ANPASS}) für den Sollwert (T_{SOLL}) der Innenraumtemperatur,
- Ermittlung der Betriebsdauer des Fahrzeuges (12) ab dem letzten Startzeitpunkt,
- Ermittlung der Standdauer des Fahrzeuges (12) ab dem letzten Abschaltzeitpunkt,
- Ermittlung eines Anteils (ΔT_{SOLL}) des Anpaßwerts (ΔT_{ANPASS}), der zwischen einem vorgebbaren Mindestanteil des Anpaßwerts (ΔT_{ANPASS}) und einem Maximalanteil liegt, wobei dieser Anteil (ΔT_{SOLL})
- gleich dem Mindestanteil ist, wenn das Fahrzeug nach Ablauf einer vorgebbaren Maximalstanddauer gestartet wird,
- gleich dem Maximalanteil ist, wenn die Betriebsdauer größer als eine vorgebbare Maximalbetriebsdauer ist,
- sich während der aktuellen Betriebsdauer mit einer vorgebbaren Anstiegsrate bis zum Maximalanteil erhöht oder
- sich während der aktuellen Standdauer mit einer vorgebbaren Abfallrate verringert, und
- Verändern des Sollwerts (T_{SOLL}) der Innenraumtemperatur um den jeweils ermittelten Anteil (ΔT_{SOLL}) des Anpaßwerts (ΔT_{ANPASS}).

2. Verfahren nach Anspruch 1, **dadurch gekennzeichnet, daß** der Anteil (ΔT_{SOLL}) des Anpaßwerts (ΔT_{ANPASS}) zu Beginn der aktuellen Betriebsdauer gleich dem während der vorherigen Standdauer um die Abfallrate verringerten Anteil (ΔT_{SLL}) ist, wenn die vorherige Standdauer kürzer als die Maximalstanddauer war.

3. Verfahren nach Anspruch 1 oder 2, **dadurch gekennzeichnet, daß** die Maximalstanddauer derjenige Zeitraum ist, innerhalb dessen der Anteil (ΔT_{SOLL}) des Anpaßwerts (ΔT_{ANPASS}) unter Berücksichtigung der Abfallrate auf den Mindestanteil abgefallen ist.

4. Verfahren nach einem der Ansprüche 1 bis 3, **dadurch gekennzeichnet, daß** die Abfallrate größer ist als, insbes ondere doppelt so groß ist wie die Anstiegsrate.

5. Verfahren nach einem der Ansprüche 1 bis 4, **dadurch gekennzeichnet, daß** der Maximalanteil des Anpaßwerts (ΔT_{ANPASS}) gleich dem vollen Anpaßwert (ΔT_{ANPASS}) ist.

6. Verfahren nach einem der Ansprüche 1 bis 5, **dadurch gekennzeichnet, daß** der Mindestanteil des Anpaßwerts (ΔT_{ANPASS}) im Bereich zwischen der Hälfte des Maximalanteils und 3/4 des Maximalanteils liegt.

7. Verfahren nach einem der Ansprüche 1 bis 6, **dadurch gekennzeichnet, daß** die Abfallrate und/oder die Anstiegsrate über der Zeit konstant oder veränderlich ist.

8. Verfahren nach einem der Ansprüche 1 bis 7, **dadurch gekennzeichnet, daß** der Anstieg und/oder der Abfall des Anteils (ΔT_{SOLL}) des Anpaßwerts (ΔT_{ANPASS}) stufenweise, kontinuierlich oder quasi kontinuierlich erfolgt.

9. Fahrzeug-Klimaanlage mit Veränderung des Sollwerts der Innenraumtemperatur zur Kompensation einer Veränderung des Istwerts der Innenraumtemperatur infolge von äußeren Einflüssen, wie insbesondere niedrigen Außentemperaturen, mit
- einer Temperiervorrichtung (24,26) zur Temperierung von einem Fahrzeug-Innenraum (20) zuzuführender Luft,
- einem Außentemperatursensor (52) zur Ermittlung der Außentemperatur,
- einem Innenraumtemperatursensor (46) zur Ermittlung des Istwerts (T_{IST}) der Innenraumtemperatur,
- einer Innenraumtemperatur-Einstellvorrichtung (50) zur Einstellung des Sollwerts (T_{SOLL}) der Innenraumtemperatur,
- einer Innenraumtemperatur-Regelvorrichtung (58), die ein Differenzsignal aus dem Istwert (T_{IST}) und dem Sollwert (T_{SOLL}) der Innenraumtemperatur empfängt und
- einer Sollwert-Anpaßvorrichtung (56), die dem durch die Innenraumtemperatur-Einstellvorrichtung (50) eingestellten Sollwert (T_{SOLL}) einen Anpaßwert ( ΔT_{SOLL}) überlagert, dessen Größe abhängig ist von der Außentemperatur,
**dadurch gekennzeichnet,**
- **daß** der Sollwert-Anpaßvorrichtung (56) eine Anpaßwert-Veränderungsvorrichtung (60) nachgeschaltet ist, die eine Betriebsdauer-Meßvorrichtung (62) zum Messen der Betriebsdauer des Fahrzeuges ab dem letzten Startzeitpunkt und eine Standdauer-Meßvorrichtung (62) zum Messen der Standdauer des Fahrzeuges ab dem letzten Abschaltzeitpunkt aufweist,
- **daß** die Anpaßwert-Veränderungsvorrichtung (60) einen Anteil (ΔT_{SOLL}) des Anpaßwerts (ΔT_{ANPASS}) ermittelt, der zwischen einem vorgebbaren Mindestanteil des Veränderungswe r ts (ΔT_{ANPASS}) und einem Maximalanteil des Veränderungswerts (ΔT_{ANPASS}) liegt, wobei dieser Anteil (ΔT_{SOLL})
- gleich dem Mindestanteil ist, wenn das Fahrzeug nach Ablauf einer vorgebbaren Maximalstanddauer gestartet wird,
- gleich dem Maximalanteil ist, wenn die Betriebsdauer größer als eine vorgebbare Maximalbetriebsdauer ist,
- sich während der aktuellen Betriebsdauer mit einer vorgebbaren Anstiegsrate bis zum Maximalanteil erhöht oder
- sich während der aktuellen Standdauer mit einer vorgebbaren Abfallrate verringert, und
**daß** die Anpaßwert-Veränderungsvorrichtung (60) den Anpaßwert (ΔT_{ANPASS}) auf den jeweils ermittelten Anteil (ΔT_{SOLL}) setzt.

10. Fahrzeug-Klimaanlage nach Anspruch 9, **dadurch gekennzeichnet, daß** die Maximalstanddauer derjenige Zeitraum ist, innerhalb dessen der Anteil (ΔT_{SOLL}) des Anpaßwerts (ΔT_{ANPASS}) unter Berücksichtigung der Abfallrate auf den Mindestanteil abgefallen ist.

11. Fahrzeug-Klimaanlage nach Anspruch 9 oder 10, **dadurch gekennzeichnet, daß** der Anteil (ΔT_{SOLL}) des Anpaßwerts (ΔT_{ANPASS}) zu Beginn einer Betriebsdauer gleich dem während der vorherigen Standdauer um die Abfallrate verringerten Anteil (ΔT_{SOLL}) ist, wenn die vorherige Standdauer kürzer als die Maximalstanddauer war.

12. Fahrzeug-Klimaanlage nach einem der Ansprüche 9 bis 11, **dadurch gekennzeichnet, daß** die Abfallrate größer ist als, insbesondere doppelt so groß ist wie die Anstiegsrate.

13. Fahrzeug-Klimaanlage nach einem der Ansprüche 9 bis 12, **dadurch gekennzeichnet, daß** der Maximalanteil des Anpaßwerts (ΔT_{ANPASS}) gleich dem vollen Anpaßwert (ΔT_{ANPASS}) ist.

14. Fahrzeug-Klimaanlage nach einem der Ansprüche 9 bis 12, **dadurch gekennzeichnet, daß** der Mindestanteil des Anpaßwerts (ΔT_{ANPASS}) im Bereich zwischen der Hälfte des Maximalanteils und 3/4 des Maximalanteils liegt.

15. Fahrzeug-Klimaanlage nach einem der Ansprüche 9 bis 14, **dadurch gekennzeichnet, daß** die Abfallrate und/ oder die Anstiegsrate über der Zeit konstant oder veränderlich ist.

16. Fahrzeug-Klimaanlage nach einem der Ansprüche 9 bis 15, **dadurch gekennzeichnet, daß** der Anstieg und/oder der Abfall des Anteils (Δ T_{SOLL}) des Anpaßwerts (ΔT_{ANPASS}) stufenweise, kontinuierlich oder quasi kontinuierlich erfolgt.

## Claims

1. Method of changing the nominal value of the inside cabin temperature of a vehicle with climate control unit for compensating a change of the actual value of the inside cabin temperature due to external influences, in particular low outside temperatures, comprising the following stages:
- determination of the matching value (D_{MATCH}), as required for compensating external influences, for the nominal value (T_{NOMINAL}) of the inside cabin temperature;
- determination of the duration of operation of the vehicle (12) as of the last temporal starting point;
- determination of the duration of idleness (12) as of the last temporal switch-off point;
- determination of a proportion (DT_{NOMINAL}) of the matching value (DT_{MATCH}), which lies between a given minimum proportion of the matching value (DT_{MATCH}) and a maximum proportion, and this proportion (DT_{NOMINAL}) is
- equal the minimum proportion when the vehicle is started after expiration of a given maximum period of idleness,
- equal the maximum proportion when the duration of operation is longer than a given maximum period of operation,
- increased during the actual duration of operation with a given increase rate up to the maximum proportion, or
- reduced during the actual idle period at a given decrease rate, and
- changing the nominal value (T_{NOMINAL}) of the inside cabin temperature by a respective determined proportion (DT_{NOMINAL}) of the matching value (DT_{MATCH}).

2. Method according to Claim 1, **characterised in that** the proportion (DT_{NOMINAL}) of the matching value (DT_{MATCH}) at the beginning of an actual operating period equals the proportion (DT_{NOMINAL}) as reduced during the prior idle period by the reduction rate if the previous idle period was shorter than the maximum idle period.

3. Method according to Claim 1 or 2, **characterised in that** the maximum idle period is the period of time within which the proportion (DT_{NOMINAL}) of the matching value (DT_{MATCH}) has decreased to the minimum proportion whilst taking into consideration the decrease rate.

4. Method according to one of Claims 1 to 3, **characterised in that** the decrease rate is greater, in particular twice as great, as the increase rate.

5. Method according to one of Claims 1 to 4, **characterised in that** the maximum proportion of the matching value (DT_{MATCH}) equals the full matching value (DT_{MATCH}).

6. Method according to one of Claims 1 to 5, **characterised in that** the minimum proportion of the matching value (DT_{MATCH}) lies in the range between half the maximum proportion and 3/4 of the maximum proportion.

7. Method according to one of Claims 1 to 6, **characterised in that** the decrease rate and/or the increase rate is temporally constant or changeable.

8. Method according to one of Claims 1 to 7, **characterised in that** the increase and/or the decrease of the proportion (DT_{NOMINAL}) of the matching value (DT_{MATCH}) is carried out in stages, continuously or quasi continuously.

9. Vehicle climate control unit with changes in the nominal value of the inside cabin temperature for compensation of a change of the actual value of the inside cabin temperature due to external influences, in particular low outside temperatures, including
- a tempering device (24, 26) for tempering air to be delivered to the inside of a vehicle cabin (20),
- an outside temperature sensor (52) for determining the outside temperature,
- an inside temperature sensor (46) for determining the actual value (DT_{ACTUAL}) of the inside cabin temperature;
- an inside cabin temperature adjusting device (50) for setting the nominal value (DT_{NOMINAL}) of the inside cabin temperature;
- an inside cabin temperature regulator (58) which receives a difference signal from the actual value (T_{ACTUAL}) and the nominal value (DT_{NOMINAL}) of the inside cabin temperature, and
- a nominal value matching device (56) which superposes a matching value (DT_{NOMINAL}) over the nominal value (T_{NOMINAL}) as set by the inside cabin temperature setting device (50), the value of which is dependent on the outside temperature,
**characterised in that**
- downstream of the nominal value matching device (56) is a matching value changing device (60), comprising a operating duration measuring device (62) for measuring the operating duration of the vehicle as of the last temporal starting point and an idle duration measuring device (62) for measuring the idle period of the vehicle as of the last temporal switch-off point,
- the matching value changing device (60) determines a proportion (DT_{NOMINAL}) of the matching value (DT_{MATCH}) which lies between a given minimum proportion of the changing value (DT_{MATCH}) and a maximum proportion of the changing value (DT_{MATCH}), and this proportion (DT_{NOMINAL}) is
- equal the minimum proportion when the vehicle is started after expiration of a givent maximum idling period,
- equal the maximum proportion when the operating duration is greater than a given maximum operating duration,
- during the actual operating period increased by a given increase rate up to maximum proportion, or
- during the actual idling period reduced with a given reduction rate, and
the matching value changing device (60) sets the matching value (DT_{MATCH}) to a respective determined proportion (DT_{NOMINAL}).

10. Vehicle climate control unit according to Claim 9, **characterised in that** the maximum idle period is the temporal period within which the proportion (DT_{NOMINAL}) of the matching value (DT_{MATCH}) has decreased to the minimum proportion whilst taking into consideration the reduction rate.

11. Vehicle climate control unit according to Claim 9 or 10, **characterised in that** the proportion (DT_{NOMINAL}) of the matching value (DT_{MATCH}) at the beginning of an operating period equals the proportion (DT_{NOMINAL}) decreased during the previous idling period by the decrease rate, when the previous idling period was shorter than the maximum idling period.

12. Vehicle climate control unit according to one of Claims 9 to 11, **characterised in that** the decrease rate is greater than the increase rate, in particular twice as great.

13. Vehicle climate control unit according to one of Claims 9 to 12, **characterised in that** the maximum proportion of the matching value (DT_{MATCH}) equals the full matching value (DT_{MATCH}).

14. Vehicle climate control unit according to one of Claims 9 to 12, **characterised in that** the minimum proportion of the matching value (DT_{MATCH}) lies in the range between half of the maximum proportion and 3/4 of the maximum proportion.

15. Vehicle climate control unit according to one of Claims 9 to 14, **characterised in that** the decrease rate and/or the increase rate is temporally constant or changeable.

16. Vehicle climate control unit according to one of Claims 9 to 15, **characterised in that** the increase and/or the decrease of the proportion (DT_{NOMINAL}) of the matching value (DT_{MATCH}) is carried out in stages, continuously or quasi continuous.

## Revendications

1. Procédé de variation de la valeur de consigne de la température intérieure d'un véhicule automobile comportant une installation de climatisation pour compenser la modification de la valeur réelle de la température intérieure du véhicule à la suite d'influences extérieures, comme en particulier des températures extérieures basses, comportant les étapes suivantes :
- déterminer la valeur d'adaptation (Δ_{ADAPTATION}), pour la valeur de consigne (T_{CONSIGNE}) de la température intérieure, nécessaire pour compenser les influences extérieures,
- déterminer la durée de fonctionnement du véhicule (12) à partir du dernier instant de démarrage,
- déterminer la durée d'immobilisation du véhicule (12) depuis le dernier instant de coupure,
- déterminer une part (ΔT_{CONSIGNE}) de la valeur d'adaptation (ΔT_{ADAPTATION}), qui est située entre une part minimum prédéfinissable de la valeur d'adaptation (ΔT_{ADAPTATION}) et une part maximum, cette part (ΔT_{CONSIGNE}) :
- étant égale à la part minimum si le véhicule est démarré après l'écoulement d'une durée d'immobilisation maximum prédéfinissable,
- étant égale à la part maximum si la durée de marche est supérieure à une durée de marche maximum prédéfinissable,
- augmentant pendant la durée de marche actuelle avec un taux d'augmentation prédéfinissable jusqu'à la part maximum, ou
- diminuant pendant la durée d'immobilisation actuelle avec un taux de chute prédéfinissable, et
- modifier la valeur de consigne (T_{CONSIGNE}) de la température intérieure de la valeur respective (ΔT_{CONSIGNE}) déterminée de la valeur d'adaptation (ΔT_{ADAPTATION}).

2. Procédé selon la revendication 1, **caractérisé en ce que** la part (ΔT_{CONSIGNE}) de la valeur d'adaptation (ΔT_{ADAPTATION}) au début de la durée de marche actuelle est égale à la part (ΔT_{CONSIGNE}) diminuée du taux de chute pendant la durée d'immobilisation précédente, si la durée d'immobilisation précédente était plus courte que la durée d'immobilisation maximum.

3. Procédé selon l'une ou l'autre des revendications 1 et 2, **caractérisé en ce que** la durée d'immobilisation maximum est la période de temps pendant laquelle la part (ΔT_{CONSIGNE}) de la valeur d'adaptation (ΔT_{ADAPTATION}) est tombée à la part minimum, compte tenu du taux de chute.

4. Procédé selon l'une quelconque des revendications 1 à 3, **caractérisé en ce que** le taux de chute est supérieur, en particulier deux fois plus grand que le taux de montée.

5. Procédé selon l'une quelconque des revendications 1 à 3, **caractérisé en ce que** la part maximum de la valeur d'adaptation (ΔT_{ADAPTATION}) est égale à la valeur d'adaptation (ΔT_{ADAPTATION}) toute entière.

6. Procédé selon l'une quelconque des revendications 1 à 5, **caractérisé en ce que** la part minimum de la valeur d'adaptation (ΔT_{ADAPTATION}) est située dans la plage entre la moitié de la part maximum et les trois quarts de la part maximum.

7. Procédé selon l'une quelconque des revendications 1 à 6, **caractérisé en ce que** le taux de chute et/ou le taux de montée est constant ou variable en fonction du temps.

8. Procédé selon l'une quelconque des revendications 1 à 7, **caractérisé en ce que** la montée et/ou la chute de la part (ΔT_{CONSIGNE}) de la valeur d'adaptation (ΔT_{ADAPTATION}) a lieu par étapes, de manière continue ou quasi continue.

9. Installation de climatisation avec modification de la valeur de consigne de la température intérieure pour compenser la modification de la valeur réelle de la température intérieure à la suite d'influences extérieures, comme en particulier des températures extérieures basses, comportant :
- un dispositif d'équilibrage de température (24, 26) pour tempérer de l'air à amener à l'intérieur (20) d'un véhicule,
- un détecteur de température extérieure (52) pour déterminer la température extérieure,
- un détecteur de température intérieure (46) pour déterminer la valeur réelle (T_{RÉELLE}) de la température intérieure,
- un dispositif d'établissement (50) de la température intérieure pour régler la valeur de consigne (T_{CONSIGNE}) de la température intérieure,
- un dispositif de régulation (58) de la température intérieure qui reçoit un signal de différence entre la valeur réelle (T_{RÉELLE}) et la valeur de consigne (T_{CONSIGNE}) de la température intérieure, et
- un dispositif d'adaptation (56) de la valeur de consigne qui superpose à la valeur de consigne (T_{CONSIGNE}) établie par le dispositif d'établissement (50) de la température intérieure une valeur d'adaptation (ΔT_{CONSIGNE}) dont la grandeur dépend de la température extérieure,
**caractérisée en ce que**
- en aval du dispositif d'adaptation (56) de la valeur de consigne est branché un dispositif de modification (60) de la valeur d'adaptation qui présente un dispositif de mesure (62) de la durée de marche pour mesurer la durée de marche du véhicule à partir du dernier instant de démarrage et un dispositif de mesure (62) de la durée d'immobilisation pour mesurer la durée d'immobilisation du véhicule depuis le dernier instant de coupure,
- le dispositif de modification (60) de la valeur d'adaptation détermine une part (ΔT_{CONSIGNE}) de la valeur d'adaptation (ΔT_{ADAPTATION}) qui est située entre une part minimum prédéfinissable de la valeur de modification (ΔT_{ADAPTATION}) et une part maximum de la valeur de modification (ΔT_{ADAPTATION}), cette part (ΔT_{CONSIGNE}):
- étant égale à la part minimum si le véhicule est démarré après l'écoulement d'une durée d'immobilisation maximum prédéfinissable,
- étant égale à la part maximum si la durée de marche est supérieure à une durée de marche maximum prédéfinissable,
- augmentant pendant 1a durée de marche actuelle avec un taux d'augmentation prédéfinissable jusqu'à la part maximum, ou
- diminuant pendant la durée d'immobilisation actuelle avec un taux de chute prédéfinissable, et
- le dispositif de modification (60) de la valeur d'adaptation fixe la valeur d'adaptation (ΔT_{ADAPTATION}) à la part (ΔT_{CONSIGNE}) respectivement déterminée.

10. Installation de climatisation selon la revendication 9, **caractérisée en ce que** la durée d'immobilisation maximum est la période temps dans laquelle la part (ΔT_{CONSIGNE}) de la valeur d'adaptation (ΔT_{ADAPTATION}) est tombée à la part minimum en tenant compte du taux de chute.

11. Installation de climatisation selon l'une ou l'autre des revendications 9 et 10, **caractérisée en ce qu'**au début d'une durée de marche, la part (ΔT_{CONSIGNE}) de la valeur d'adaptation (ΔT_{ADAPTATION}) est égale à la part (ΔT_{CONSIGNE}) diminuée du taux de chute pendant la durée d'immobilisation précédente, si la durée d'immobilisation précédente était plus courte que la durée d'immobilisation maximum.

12. Installation de climatisation selon l'une quelconque des revendications 9 à 11, **caractérisée en ce que** le taux de chute est supérieur, en particulier deux fois plus grand que le taux de montée.

13. Installation de climatisation selon l'une quelconque des revendications 9 à 12, **caractérisée en ce que** la part maximum de la valeur d'adaptation (ΔT_{ADAPTATION}) est égale à la valeur d'adaptation (ΔT_{ADAPTATION}) toute entière.

14. Installation de climatisation selon l'une quelconque des revendications 9 à 12, **caractérisée en ce que** la part minimum de la valeur d'adaptation (ΔT_{ADAPTATION}) est située dans la plage entre la moitié de la part maximum et les trois quarts de la part maximum.

15. Installation de climatisation selon l'une quelconque des revendications 9 à 14, **caractérisée en ce que** le taux de chute et/ou le taux de montée est constant ou variable en fonction du temps.

16. Installation de climatisation selon l'une quelconque des revendications 9 à 15, **caractérisée en ce que** la montée et/ou la chute de la part (ΔT_{CONSIGNE}) de la valeur d'adaptation (ΔT_{ADAPTATION}) a lieu par étapes, de manière continue ou quasi continue.
